(19) Europäisches Patentamt
European Patent Office
Office européen des brevets

(11) EP 3 165 747 A1

(12) EUROPÄISCHE PATENTANMELDUNG

(43) Veröffentlichungstag:
10.05.2017 Patentblatt 2017/19

(51) Int Cl.:
F02D 41/14 (2006.01)  F02D 41/20 (2006.01)
F02D 41/40 (2006.01)  F02D 41/28 (2006.01)

(21) Anmeldenummer: 15192918.9

(22) Anmeldetag: 04.11.2015

(84) Benannte Vertragsstaaten:
AL AT BE BG CH CY CZ DE DK EE ES FI FR GB
GR HR HU IE IS IT LI LT LU LV MC MK MT NL NO
PL PT RO RS SE SI SK SM TR
Benannte Erstreckungsstaaten:
BA ME
Benannte Validierungsstaaten:
MA MD

(71) Anmelder: GE Jenbacher GmbH & Co. OG
6200 Jenbach (AT)

(72) Erfinder:
• Satria, Medy
80805 München (DE)
• Imhof, Dino
5400 Baden (CH)
• Burgmair, Raphael
83620 Feldkirchen-Westerham (DE)

(74) Vertreter: Torggler & Hofinger Patentanwälte
Postfach 85
6010 Innsbruck (AT)

(54) BRENNKRAFTMASCHINE MIT EINSPRITZMENGENSTEUERUNG

(57) Brennkraftmaschine, mit:
- einer Regeleinrichtung
- wenigstens einem Brennraum
- wenigstens einem durch die Regeleinrichtung über ein Aktuatoransteuersignal regelbaren Injektor zur Einspritzung von flüssigem Kraftstoff in den wenigstens einen Brennraum, wobei der wenigstens eine Injektor eine durch eine Nadel (6) verschließbare Ausbringöffnung für den flüssigen Kraftstoff verfügt,
wobei in der Regeleinrichtung ein Algorithmus abgelegt ist, welcher als Eingangsgröße zumindest das Aktuatoransteuersignal ($\Delta t$) erhält und über ein Injektormodell die über die Ausbringöffnung des Injektors ausgebrachte Masse an flüssigem Kraftstoff berechnet und die mittels des Injektormodells berechnete Masse mit einem gewünschten Sollwert $(m_d^{ref})$ der Masse an flüssigem Kraftstoff vergleicht und in Abhängigkeit des Ergebnisses des Vergleiches das Aktuatoransteuersignal ($\Delta t$) gleich lässt oder korrigiert und ein Verfahren zum Betreiben einer Brennkraftmaschine und eines Injektors.

Fig. 1

EP 3 165 747 A1

**Beschreibung**

Die vorliegende Erfindung betrifft eine Brennkraftmaschine mit den Merkmalen des Oberbegriffs des Anspruchs 1 und ein Verfahren mit den Merkmalen des Oberbegriffs des Anspruchs 12 bzw. 13.

Eine gattungsgemäße Brennkraftmaschine und ein gattungsgemäßes Verfahren gehen aus der DE 100 55 192 A1 hervor. In dieser Schrift ist ein Verfahren zur Rundlaufregelung von Dieselmotoren offenbart, wobei die Einspritzmenge der den Zylindern zugeordneten Injektoren mit Hilfe eines Korrekturfaktors korrigiert wird.

Problematisch beim Stand der Technik ist, dass man zur Abfederung von Alterungs- oder Abnutzungserscheinungen des Injektors (Injektordrift) die Brennkraftmaschine nicht am eigentlich erlaubten Limit für die Schadstoffemissionen betreibt, sondern unter Berücksichtigung eines Verschlechterungsfaktors einen größeren Abstand zum erlaubten Limit lässt. Über die Lebensdauer verändert sich durch die Injektordrift die tatsächlich eingespritzte Masse an flüssigem Kraftstoff, die bei einem bestimmten Aktuatoransteuersignal (z. B. Bestromungsdauer) vorliegt.

Aufgabe der Erfindung ist die Bereitstellung einer Brennkraftmaschine und eines Verfahrens, bei welchen über die Lebensdauer des Injektors ein Betrieb der Brennkraftmaschine näher am Limit für die Schadstoffemissionen möglich ist.

Diese Aufgabe wird durch eine Brennkraftmaschine mit den Merkmalen des Anspruchs 1 und ein Verfahren mit den Merkmalen des Anspruchs 12 bzw. 13 gelöst. Vorteilhafte Ausführungsformen der Erfindung sind in den abhängigen Ansprüchen definiert.

Als Beispiel für den flüssigen Kraftstoff sei Diesel genannt. Es könnte auch Schweröl oder ein anderer selbstzündfähiger Kraftstoff sein.

Dadurch, dass in der Regeleinrichtung ein Algorithmus abgelegt ist, welcher als Eingangsgrößen zumindest das Aktuatoransteuersignal erhält und über ein Injektormodell die über die Ausbringöffnung des Injektors ausgebrachte Masse an flüssigem Kraftstoff (z. B. Diesel) berechnet und die mittels des Injektormodells berechnete Masse mit einem gewünschten Sollwert der Masse an flüssigem Kraftstoff vergleicht und in Abhängigkeit des Ergebnisses des Vergleiches das Aktuatoransteuersignal gleich lässt oder korrigiert, ist es möglich die Masse an flüssigem Kraftstoff über die gesamte Lebensdauer des Injektors exakt zu regeln. Damit kann stets am erlaubten Limit für die Schadstoffemissionen gearbeitet werden.

Der Algorithmus schätzt auf Basis des Aktuatoransteuersignals eine Masse an eingespritztem flüssigen Kraftstoff ab. Die Erfindung geht dann von der durch den Algorithmus berechneten Masse an eingespritztem Kraftstoff aus und vergleicht diesen Wert mit dem gewünschten Sollwert. Bei Abweichungen kann sofort (z. B. innerhalb von 10 Millisekunden) korrigiert werden.

Anstelle der Masse an eingespritztem Kraftstoff könnten natürlich auch das Volumen oder andere Größen berechnet werden, welche für eine bestimmte Masse an eingespritztem Kraftstoff charakteristisch sind. Alle diese Möglichkeiten sind in der vorliegenden Offenbarung bei Verwendung des Begriffs "Masse" erfasst.

Bevorzugt ist wenigstens ein Sensor vorgesehen, durch welchen wenigstens eine Messgröße des wenigstens einen Injektors messbar ist, wobei der Sensor in Signalverbindung mit der Regeleinrichtung steht oder bringbar ist. In diesem Fall kann der Algorithmus unter Berücksichtigung der wenigstens einen Messgröße über das Injektormodell die über die Ausbringöffnung des Injektors ausgebrachte Masse an flüssigem Kraftstoff berechnen. Es ist natürlich auch möglich, mehrere Messgrößen zur Abschätzung der ausgebrachten Masse an flüssigem Kraftstoff zu verwenden.

Bevorzugt ist vorgesehen, dass der Algorithmus eine Vorsteuerung aufweist, welche aus dem gewünschten Sollwert der Masse an flüssigem Kraftstoff einen Vorsteuerbefehl (auch als "Vorsteuersignal" bezeichnet) für das Aktuatoransteuersignal für die Einspritzdauer berechnet. Die Vorsteuerung stellt eine schnelle Systemantwort sicher, da sie den Injektor mit einer solchen Einspritzdauer ansteuert, als ob keine Injektorvariabilität existieren würde. Die Vorsteuerung verwendet z. B. ein Injektorkennfeld (welches beispielsweise bei einem als Solenoidventil ausgebildeten Aktuator die Bestromungsdauer über die Einspritzmasse oder -volumen angibt) oder ein invertiertes Injektormodell um den Sollwert der einzuspritzenden Masse an flüssigem Kraftstoff in den Vorsteuerbefehl für die Einspritzdauer umzuwandeln.

Bei einer Ausbildung der Regeleinrichtung mit Vorsteuerung kann besonders bevorzugt vorgesehen sein, dass der Algorithmus eine Rückkopplungsschleife aufweist, welche unter Berücksichtigung des von der Vorsteuerung berechneten Vorsteuerbefehls für die Einspritzdauer und der wenigstens einen Messgröße mittels des Injektormodells die über die Ausbringöffnung des Injektors eingespritzte Masse an flüssigem Kraftstoff berechnet und ggf. (bei Vorliegen einer Abweichung) den von der Vorsteuerung berechneten Sollwert für die Einspritzdauer korrigiert. Die Rückkopplungsschleife wird verwendet, um die Ungenauigkeiten der Vorsteuerung (aufgrund von Herstellungsvariabilitäten, Abnutzung, usw.), welche eine Injektordrift verursachen, zu korrigieren.

Bevorzugt weist der Algorithmus einen Beobachter auf, welcher unter Verwendung des Injektormodells die eingespritzte Masse an flüssigem Kraftstoff in Abhängigkeit der wenigstens einen Messgröße und des zumindest einen Aktuatoransteuersignals abschätzt. Eine tatsächliche Messung der eingespritzten Masse an flüssigem Kraftstoff ist daher für die Rückkopplungsschleife nicht erforderlich. Unabhängig davon, ob eine Rückkopplungsschleife vorgesehen ist, kann die vom Beobachter abgeschätzte eingespritzte Masse an flüssigem Kraftstoff in der Vorsteuerung verwendet werden um das Aktuatoransteuersignal zu verbessern.

Verschiedene mögliche Ausbildungen des Beobachters sind dem Fachmann aus der Literatur bekannt (z. B. Luenberger-Beobachter, Kaiman-Filter, "Sliding Mode" Beobachter, usw.).

Der Beobachter kann auch dazu dienen, mit Hilfe des Injektormodells den sich über die Lebensdauer des Injektors verändernden Zustand des Injektors (z. B. durch Alterung oder Verschleiß) für eine Verbesserung des Vorsteuersignals und/oder des Aktuatoransteuersignals zu berücksichtigen.

Grundsätzlich ist es möglich, das Aktuatoransteuersignal auf Basis des Sollwertes für die eingespritzte Masse an flüssigem Kraftstoff und auf Basis der vom Beobachter abgeschätzten Masse an flüssigem Kraftstoff zu berechnen. Man erhält so ein adaptives, vom Beobachter modifiziertes Vorsteuersignal. In diesem Fall ist die Regelung also nicht zweiteilig aufgebaut, mit einer Vorsteuerung und einer das Vorsteuersignal korrigierenden Rückkopplungsschleife.

Es kann vorgesehen sein, dass das Injektormodell wenigstens beinhaltet:

- die Druckverläufe in mit dem flüssigen Kraftstoff gefüllten Volumina des Injektors
- Massenflussraten zwischen den mit dem flüssigen Kraftstoff gefüllten Volumina des Injektors
- eine Position der Nadel, vorzugsweise relativ zum Nadelsitz
- Dynamik des Aktuators der Nadel, vorzugsweise Dynamik eines Solenoidventils

Der Injektor kann wenigstens aufweisen:

- eine mit einer Common-Rail der Brennkraftmaschine verbundene Eingangsspeicherkammer
- eine mit der Eingangsspeicherkammer verbundene Speicherkammer für flüssigen Kraftstoff
- einem mit der Speicherkammer verbundenen Volumen über Nadelsitz
- einem einerseits mit der Speicherkammer und andererseits mit einer Ablaufleitung verbundenen Verbindungsvolumen
- eine durch eine Nadel verschließbare und mit dem Volumen über Nadelsitz verbundene Ausbringöffnung für flüssigen Kraftstoff
- einen mittels des Aktuatoransteuersignals ansteuerbaren Aktuator, vorzugsweise Solenoidventil, zum Öffnen der Nadel
- vorzugsweise einer einerseits mit der Speicherkammer und andererseits mit dem Verbindungsvolumen verbundenen Steuerkammer

Die Nadel ist üblicherweise entgegen der Öffnungsrichtung durch eine Feder vorgespannt.

Es kann auch ein Injektor vorgesehen sein, der ohne Steuerkammer auskommt, beispielsweise ein Injektor, bei welchem die Nadel durch ein Piezoelement angesteuert wird.

Die wenigstens eine Messgröße kann z. B. ausgewählt sein aus den folgenden Größen oder einer Kombination daraus:

- Druck in einer Common-Rail der Brennkraftmaschine
- Druck in einer Eingangsspeicherkammer des Injektors
- Druck in einer Steuerkammer des Injektors
- Beginn des Abhebens der Nadel vom Nadelsitz

Die Regeleinrichtung kann dazu ausgebildet sein, den Algorithmus während jedes Verbrennungszyklus oder ausgewählter Verbrennungszyklen der Brennkraftmaschine auszuführen und bei Abweichungen das Aktuatoransteuersignal während dieses Verbrennungszyklus zu korrigieren.

Alternativ kann die Regeleinrichtung dazu ausgebildet sein, den Algorithmus während jedes Verbrennungszyklus oder ausgewählter Verbrennungszyklen der Brennkraftmaschine auszuführen und bei Abweichungen das Aktuatoransteuersignal in einem der nachfolgenden Verbrennungszyklen, bevorzugt im unmittelbar nachfolgenden Verbrennungszyklus, zu korrigieren.

Alternativ oder zusätzlich zu einer der oben genannten Ausführungsformen kann die Regeleinrichtung dazu ausgebildet sein, den Algorithmus während jedes Verbrennungszyklus oder ausgewählter Verbrennungszyklen der Brennkraftmaschine auszuführen und die aufgetretenen Abweichungen statisch auszuwerten und eine Korrektur für diesen oder einen der nachfolgenden Verbrennungszyklen in Abhängigkeit der statischen Auswertung vorzunehmen.

Es ist für die Erfindung nicht unbedingt erforderlich, die Masse an eingespritztem flüssigem Kraftstoff unmittelbar zu messen. Es ist auch nicht erforderlich, unmittelbar aus der wenigstens einen Messgröße auf die tatsächlich eingespritzte Masse an flüssigem Kraftstoff rückzuschließen.

Die Erfindung kann bevorzugt bei einer stationären Brennkraftmaschine, für Marineanwendungen oder mobile Anwendungen wie sogenannte "Non-Road-Mobile-Machinery" (NRMM) - vorzugsweise jeweils als Hubkolbenmaschine - eingesetzt werden. Die Brennkraftmaschine kann als mechanischer Antrieb dienen, z. B. zum Betreiben von Verdichteranlagen oder mit einem Generator zu einem Gensets zur Erzeugung elektrischer Energie gekoppelt sein. Die Brennkraftmaschine weist bevorzugt eine Vielzahl von Brennräumen mit entsprechenden Gaszuführvorrichtungen und Injektoren auf. Die Regelung kann individuell für jeden Brennraum erfolgen.

Ausführungsbeispiele der Erfindung werden anhand der Figuren erläutert. Es zeigen:

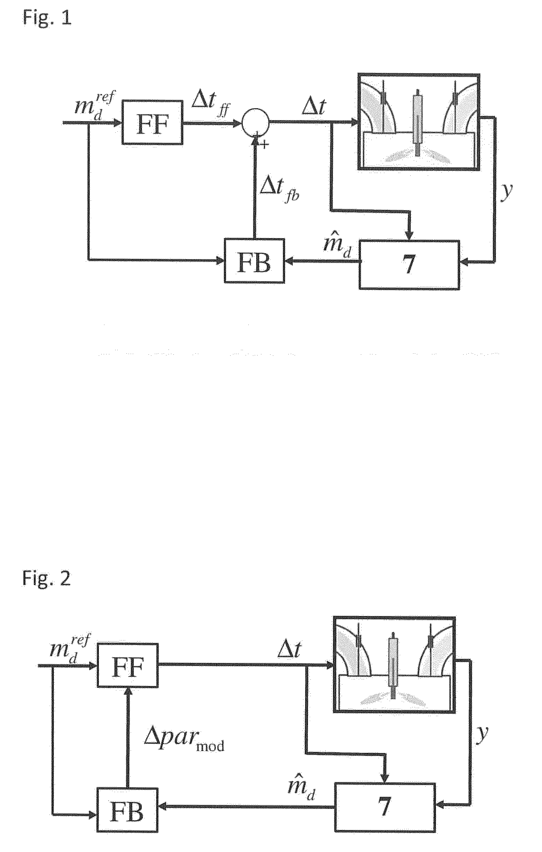

Fig. 1  ein erstes Ausführungsbeispiel des erfindungsgemäßen Regelschemas
Fig. 2  ein zweites Ausführungsbeispiel des erfindungsgemäßen Regelschemas
Fig. 3  ein erstes Beispiel eines schematisch dargestellten Injektors
Fig. 4  ein zweites Beispiel eines schematisch dargestellten Injektors

Fig. 1:

Ziel der Injektorregelung ist bei diesem Ausführungsbeispiel die Regelung der tatsächlich eingespritzten Masse an flüssigem Kraftstoff auf einen Sollwert $m_d^{ref}$ hin, indem die Einspritzdauer $\Delta t$ gesteuert wird. Die Regelstrategie erfolgt durch

- eine Vorsteuerung (FF), welche aus einem gewünschten Sollwert $m_d^{ref}$ für die Masse an flüssigem Kraftstoff ein Vorsteuersignal $\Delta t_{ff}$ (im Folgenden auch als "Steuerbefehl" bezeichnet) für die Einspritzdauer $\Delta t$ berechnet und
- eine Rückkopplungsschleife (FB), welche unter Verwendung eines Beobachters 7 ("State Estimator") unter Berücksichtigung des von der Vorsteuerung berechneten Steuerbefehls für die Einspritzdauer $\Delta t$ und wenigstens einer Messgröße y (z. B. einer der im Injektor auftretenden Druckverläufe $p_{IA}$, $p_{CC}$, $p_{JC}$, $p_{AC}$, $p_{SA}$, oder der Beginn des Abhebens der Nadel vom Nadelsitz) mittels eines Injektormodells den über die Ausbringöffnung des Injektors ausgebrachten Massenstrom $\hat{m}_d$ an flüssigem Kraftstoff abschätzt und ggf. den von der Vorsteuerung berechneten Sollwert $\Delta t_{ff}$ für die Einspritzdauer mittels eines Korrekturwerts $\Delta t_{fb}$ (welcher negativ sein kann) auf die tatsächliche Dauer des Aktuatoransteuersignals $\Delta t$ korrigiert.

Die Vorsteuerung stellt eine schnelle Systemantwort sicher, da sie den Injektor mit einer Einspritzdauer $\Delta t_{ff}$ ansteuert, als ob keine Injektorvariabilität existieren würde. Die Vorsteuerung verwendet ein kalibriertes Injektorkennfeld (welches Bestromungsdauer über Einspritzmasse oder -volumen angibt) oder das invertierte Injektormodell um den Sollwert $m_d^{ref}$ der Masse an flüssigem Kraftstoff in den Vorsteuerbefehl $\Delta t_{ff}$ für die Einspritzdauer umzuwandeln.

Die Rückkopplungsschleife (FB) wird verwendet um die Ungenauigkeiten der Vorsteuerung (aufgrund von Herstellungsvariabilitäten, Abnutzung, usw.) zu korrigieren, welche eine Injektordrift verursachen. Die Rückkopplungsschleife vergleicht den Sollwert $m_d^{ref}$ mit der abgeschätzten eingespritzten Masse $\hat{m}_d$ an flüssigem Kraftstoff und gibt als Rückkopplung einen Korrektursteuerbefehl $\Delta t_{fb}$ für die Einspritzdauer ab, falls es eine Diskrepanz zwischen $m_d^{ref}$ und $\hat{m}_d$ gibt. Die Addition von $\Delta t_{ff}$ und $\Delta t_{fb}$ ergibt die schlussendliche Einspritzdauer $\Delta t$.

Der Beobachter schätzt die eingespritzte Masse $\hat{m}_d$ an flüssigem Kraftstoff in Abhängigkeit der wenigsten einen Messgröße y und der schlussendlichen Einspritzdauer $\Delta t$ ab. Die wenigstens eine Messgröße y kann sich z.B. beziehen auf: common rail Druck $p_{CR}$, Druck in der Eingangsspeicherkammer $p_{IA}$, Druck in der Steuerkammer $p_{CC}$ und Beginn des Abhebens der Nadel vom Nadelsitz. Der Beobachter verwendet ein reduziertes Injektormodell um die eingespritzte Masse $\hat{m}_d$ an flüssigem Kraftstoff abzuschätzen.

Fig. 2:

Diese Figur zeigt eine einteilige (ohne Vorsteuerbefehl $\Delta t_{ff}$) aufgebaute Regelung, bei welcher das Aktuatoransteuersignal $\Delta t$ auf Basis des Sollwertes $m_d^{ref}$ für die eingespritzte Masse an flüssigem Kraftstoff und auf Basis der vom Beobachter abgeschätzten, im Vorsteuermodell benutzten Parameter $\Delta par_{mod}$ berechnet wird. Man erhält so ein adaptives, vom Beobachter modifiziertes Vorsteuersignal. In diesem Fall ist die Regelung also nicht zweiteilig aufgebaut, mit einer Vorsteuerung und einer das Vorsteuersignal korrigierenden Rückkopplungsschleife.

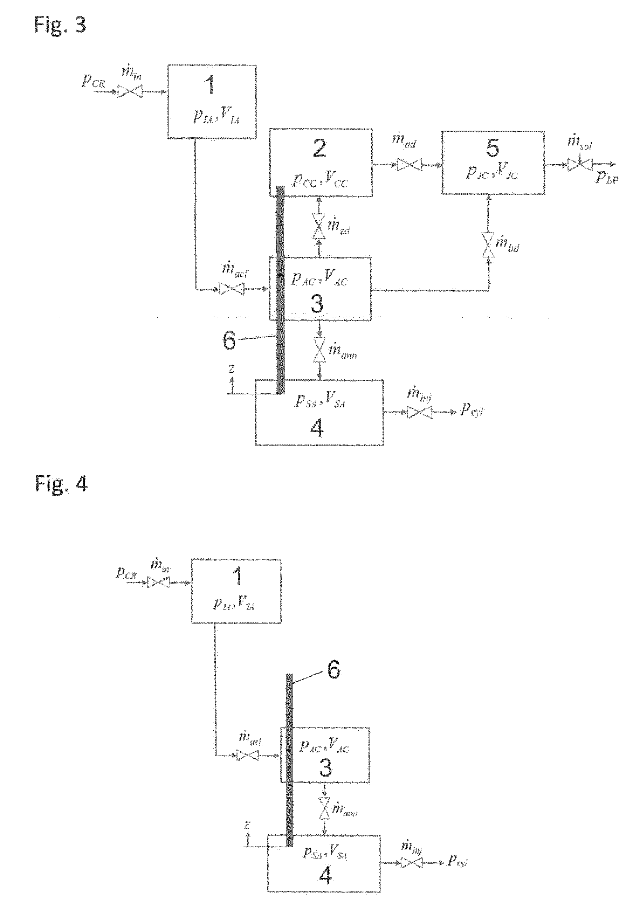

Die Fig. 3 zeigt ein Blockdiagramm eines reduzierten Injektormodells. Das Injektormodell besteht aus einem Strukturmodell des Injektors und einem Gleichungssystem zur Beschreibung des dynamischen Verhaltens des Strukturmodells. Das Strukturmodell besteht aus fünf modellierten Volumina: Eingangsspeicherkammer 1, Speicherkammer 3, Steuerkammer 2, Volumen über Nadelsitz und Verbindungsvolumen 5.

Die Eingangsspeicherkammer 1 stellt die Zusammenfassung aller Volumina zwischen der Eingangsdrossel und dem Rückschlagventil dar. Die Speicherkammer 3 stellt die Zusammenfassung aller Volumina vom Rückschlagventil bis zum Volumen oberhalb des Nadelsitzes dar. Das Volumen über Nadelsitz stellt die Zusammenfassung aller Volumina zwischen dem Nadelsitz bis zur Ausbringöffnung des Injektors dar. Das Verbindungsvolumen 5 stellt die Zusammenfassung aller Volumina dar, welches die Volumina der Speicherkammer 3 und der Steuerkammer 2 mit dem Solenoidventil verbindet.

Die Fig. 4 zeigt einen alternativ ausgebildeten Injektor, der ohne Steuerkammer 2 auskommt, beispielsweise ein Injektor, bei welchem die Nadel durch ein Piezoelement angesteuert wird.

Das nachfolgende Gleichungssystem bezieht sich nicht auf die in Figur 4 gezeigte Ausführung. Die Formulierung eines entsprechenden Gleichungssystems kann analog zu dem nachstehend gezeigten Gleichungssystem erfolgen.

Das dynamische Verhalten des Strukturmodells wird durch folgende Gleichungssysteme beschrieben:

Druckdynamik

Die zeitliche Entwicklung des Druckes innerhalb jedes der Volumina wird auf Basis einer Kombination des Massenerhaltungssatzes und der Druck-Dichte-Charakteristik des flüssigen Kraftstoffes berechnet. Die zeitliche Entwicklung des Druckes ergibt sich aus:

$$\dot{p}_{IA} = \frac{K_f}{\rho_{IA} V_{IA}} \left( \dot{m}_{in} - \dot{m}_{aci} \right) \qquad\qquad \text{Gl. 1.1}$$

$$\dot{p}_{CC} = \frac{K_f}{\rho_{CC} V_{CC}} \left( \dot{m}_{zd} - \dot{m}_{ad} - \rho_{CC} \dot{V}_{CC} \right) \qquad\qquad \text{Gl. 1.2}$$

$$\dot{p}_{JC} = \frac{K_f}{\rho_{JC} V_{JC}} \left( \dot{m}_{bd} + \dot{m}_{ad} - \dot{m}_{sol} \right) \qquad\qquad \text{Gl. 1.3}$$

$$\dot{p}_{AC} = \frac{K_f}{\rho_{AC} V_{AC}} \left( \dot{m}_{aci} - \dot{m}_{ann} - \dot{m}_{bd} - \dot{m}_{zd} - \rho_{AC} \dot{V}_{AC} \right) \qquad\qquad \text{Gl. 1.4}$$

$$\dot{p}_{SA} = \frac{K_f}{\rho_{SA} V_{SA}} \left( \dot{m}_{ann} - \dot{m}_{inj} - \rho_{SA} \dot{V}_{SA} \right) \qquad\qquad \text{Gl. 1.5}$$

Verwendete Formelzeichen

| | |
|---|---|
| $p_{IA}$ | : Druck in der Eingangsspeicherkammer 1 in bar |
| $p_{CC}$ | : Druck in der Steuerkammer 2 in bar |
| $p_{JC}$ | : Druck im Verbindungsvolumen 5 in bar |
| $p_{AC}$ | : Druck in der Speicherkammer 3 in bar |
| $p_{SA}$ | : Druck in der kleinen Speicherkammer 4 in bar |
| $\rho_{IA}$ | : Dieselmassendichte innerhalb der Eingangsspeicherkammer 1 in $kg/m^3$ |
| $\rho_{CC}$ | : Dieselmassendichte innerhalb der Steuerkammer 2 in $kg/m^3$ |
| $\rho_{JC}$ | : Dieselmassendichte innerhalb des Verbindungsvolumens 5 in $kg/m^3$ |
| $\rho_{AC}$ | : Dieselmassendichte innerhalb der Speicherkammer 3 in $kg/m^3$ |
| $\rho_{SA}$ | : Dieselmassendichte innerhalb der kleinen Speicherkammer 4 in $kg/m^3$ |
| $K_f$ | : Kompressionsmodul des Dieseltreibstoffs in bar |

Nadeldynamik

Die Nadelposition wird anhand der folgenden Bewegungsgleichung berechnet:

$$\ddot{z} = \begin{cases} 0 \; if \; F_{hyd} \leq F_{pre} \\ \frac{1}{m}\left(F_{hyd} - Kz - B\dot{z} - F_{pre}\right) if \; F_{hyd} > F_{pre} \end{cases} \qquad \text{Gl. 2.1}$$

$$F_{hyd} = p_{AC}A_{AC} + p_{SA}A_{SA} - p_{CC}A_{CC} \qquad \text{Gl. 2.2}$$

$$0 \leq z \leq z_{max} \qquad \text{Gl. 2.3}$$

Verwendete Formelzeichen:

| | |
|---|---|
| $z$ | : Nadelposition in Metern (m) |
| $z_{max}$ | : Maximale Auslenkung der Nadel 6 in m |
| $K$ | : Federsteifigkeit in N/m |
| $B$ | : Federdämpfungskoeffizient in N.s/m |
| $F_{pre}$ | : Federvorspannung in N |
| $A_{AC}$ | : Hydraulische Wirkfläche in der Speicherkammer 3 in $m^2$ |
| $A_{SA}$ | : Hydraulische Wirkfläche in der kleinen Speicherkammer 4 in $m^2$ |
| $A_{CC}$ | : Hydraulische Wirkfläche in der Steuerkammer 2 in $m^2$ |

Dynamik des Solenoidventils

Das Solenoidventil wird durch eine Transferfunktion erster Ordnung modelliert, welche den Ventilöffnungsbefehl in eine Ventilposition umwandelt. Diese ist gegeben durch:

$$u_{sol}^{cmd} \rightarrow \boxed{\frac{z_{sol}^{max}}{\tau_{sol}s + 1}} \rightarrow z_{sol}$$

Das transiente Systemverhalten wird durch die Zeitkonstante $\tau_{sol}$ charakterisiert und die Position der Nadel 6 bei der maximalen Ventilöffnung ist durch $z_{sol}^{max}|$ gegeben. Statt einem Solenoidventil ist auch eine piezoelektrische Betätigung möglich.

Massenflussraten

Die Massenflussrate durch jedes Ventil wird aus der Standarddrosselgleichung für Flüssigkeiten berechnet, welche lautet:

$$\dot{m}_{in} = A_{in}C_{din}\sqrt{2\rho_j|p_{CR} - p_{IA}|}.sgn(p_{CR} - p_{IA}) \qquad \text{Gl. 3.1}$$

$$\dot{m}_{bd} = A_{bd}C_{dbd}\sqrt{2\rho_j|p_{AC} - p_{JC}|}.sgn(p_{AC} - p_{JC}) \qquad \text{Gl. 3.2}$$

$$\dot{m}_{zd} = A_{zd}C_{dzd}\sqrt{2\rho_j|p_{AC} - p_{CC}|}.sgn(p_{AC} - p_{CC}) \qquad \text{Gl. 3.3}$$

$$\dot{m}_{ad} = A_{ad}C_{dad}\sqrt{2\rho_j|p_{CC} - p_{JC}|}.sgn(p_{CC} - p_{JC}) \qquad \text{Gl. 3.4}$$

$$\dot{m}_{sol} = A_{sol}C_{dsol}\sqrt{2\rho_j|p_{JC} - p_{LP}|}.sgn(p_{JC} - p_{LP}) \qquad \text{Gl. 3.5}$$

$$\dot{m}_{aci} = A_{aci}C_{daci}\sqrt{2\rho_j|p_{IA} - p_{AC}|}.sgn(p_{IA} - p_{AC}) \qquad \text{Gl. 3.6}$$

$$\dot{m}_{ann} = A_{ann}C_{dann}\sqrt{2\rho_j|p_{AC} - p_{SA}|}.sgn(p_{AC} - p_{SA}) \qquad \text{Gl. 3.7}$$

$$\dot{m}_{inj} = A_{inj}C_{dinj}\sqrt{2\rho_{SA}|p_{SA} - p_{cyl}|}.sgn(p_{SA} - p_{cyl}) \qquad \text{Gl. 3.8}$$

$$\rho_j = \begin{cases} \rho_{in} \ if \ p_{in} \geq p_{out} \\ \rho_{out} \ if \ p_{in} < p_{out} \end{cases} \qquad \text{Gl. 3.9}$$

Verwendete Formelzeichen:

$\dot{m}_{in}$ : Massenflussdichte über die Eingangsdrossel in kg/s
$\dot{m}_{bd}$ : Massenflussrate über das Bypassventil zwischen Speicherkammer 3 und Verbindungsvolumen 5 in kg/s
$\dot{m}_{zd}$ : Massenflussrate über das Speiseventil beim Einlass der Steuerkammer 2 in kg/s
$\dot{m}_{ad}$ : Massenflussrate über das Auslassventil der Steuerkammer 2 in kg/s
$\dot{m}_{sol}$ : Massenflussrate über das Solenoidventil in kg/s
$\dot{m}_{aci}$ : Massenflussrate über den Einlass der Speicherkammer 3 in kg/s
$\dot{m}_{ann}$ : Massenflussrate über den Nadelsitz in kg/s
$\dot{m}_{inj}$ : Massenflussrate über die Injektordüse in kg/s

Auf Basis des oben formulierten Injektormodells erhält der Fachmann mittels des Beobachters in an sich bekannter Weise (siehe z. B. Isermann, Rolf, "Digitale Regelsysteme", Springer Verlag Heidelberg 1977, Kapital 22.3.2, Seite 379 ff. oder F. Castillo et al., "Simultaneous Air Fraction and Low-Pressure EGR Mass Flow Rate Estimation for Diesel Engines", IFAC Joint conference SSSC-5th Symposium on System Structure and Control, Grenoble, France 2013) den abgeschätzten Wert $\hat{m}_d$.

Unter Verwendung obiger Gleichungssysteme konstruiert man die sogenannten Beobachtergleichungen ("observer equations"), vorzugsweise unter Verwendung eines an sich bekannten Beobachters vom "sliding mode observer"-Typ, indem man zu den Gleichungen des Injektormodells das sogenannte Beobachtergesetz ("observer law") hinzufügt. Bei einem "sliding mode" Beobachter erhält man das Beobachtergesetz durch Berechnung einer Hyperfläche ("hypersurface") aus dem wenigstens einen Messsignal und jenem Wert, der sich aus den Beobachtergleichungen ergibt. Durch Quadrierung der Gleichung der Hyperfläche erhält man eine verallgemeinerte Ljapunovgleichung (verallgemeinerte Energiegleichung). Dabei handelt es sich um eine Funktionalgleichung. Das Beobachtergesetz ist jene Funktion, welche die Funktionalgleichung minimiert. Diese kann durch die an sich bekannten Variationstechniken oder numerisch bestimmt werden. Dieser Vorgang wird innerhalb eines Verbrennungszyklus für jeden Zeitschritt (abhängig von der zeitlichen Auflösung der Regelung) durchgeführt.

Das Ergebnis ist je nach Anwendung die abgeschätzte eingespritzte Masse an flüssigem Kraftstoff, die Position der Nadel 6 oder einer der Drücke in einem der Volumina des Injektors.

**Patentansprüche**

1. Brennkraftmaschine, mit:

- einer Regeleinrichtung
- wenigstens einem Brennraum
- wenigstens einem durch die Regeleinrichtung über ein Aktuatoransteuersignal regelbaren Injektor zur Einspritzung von flüssigem Kraftstoff in den wenigstens einen Brennraum, wobei der wenigstens eine Injektor eine durch eine Nadel (6) verschließbare Ausbringöffnung für den flüssigen Kraftstoff verfügt,

**dadurch gekennzeichnet, dass** in der Regeleinrichtung ein Algorithmus abgelegt ist, welcher als Eingangsgröße zumindest das Aktuatoransteuersignal ($\Delta t$) erhält und über ein Injektormodell die über die Ausbringöffnung des Injektors ausgebrachte Masse an flüssigem Kraftstoff berechnet und die mittels des Injektormodells berechnete Masse mit einem gewünschten Sollwert $\left(m_d^{ref}\right)$ der Masse an flüssigem Kraftstoff vergleicht und in Abhängigkeit des Ergebnisses des Vergleiches das Aktuatoransteuersignal ($\Delta t$) gleich lässt oder korrigiert.

2. Brennkraftmaschine nach Anspruch 1, wobei der Algorithmus eine Vorsteuerung (FF) aufweist, welche aus dem gewünschten Sollwert $\left(m_d^{ref}\right)$ der Masse an flüssigem Kraftstoff ein Vorsteuersignal ($\Delta t_{ff}$) für das Aktuatoransteuersignal (ot) für die Einspritzdauer berechnet.

3. Brennkraftmaschine nach wenigstens einem der vorangehenden Ansprüche, wobei wenigstens ein Sensor vorgesehen ist, durch welchen wenigstens eine Messgröße (y) des wenigstens einen Injektors messbar ist, wobei der Sensor in Signalverbindung mit der Regeleinrichtung steht oder bringbar ist.

4. Brennkraftmaschine nach Anspruch 3, wobei der Algorithmus eine Rückkopplungsschleife (FB) aufweist, welche unter Berücksichtigung des von der Vorsteuerung berechneten Aktuatoransteuersignal ($\Delta t$) für die Einspritzdauer und der wenigstens einen Messgröße (y) mittels des Injektormodells die über die Ausbringöffnung des Injektors ausgebrachte Masse an flüssigem Kraftstoff berechnet und ggf. das von der Vorsteuerung berechnete Vorsteuersignal ($\Delta t_{ff}$) für die Einspritzdauermit einem Korrekturwert ($\Delta t_{fb}$) korrigiert.

5. Brennkraftmaschine nach wenigstens einem der vorangehenden Ansprüche, wobei der Algorithmus einen Beobachter aufweist, welcher unter Verwendung des Injektormodells und unter Berücksichtigung des Aktuatoransteuersignals ($\Delta t$) und der wenigstens einen Messgröße (y) die eingespritzte Masse ($\hat{m}_d$) an flüssigem Kraftstoff abschätzt.

6. Brennkraftmaschine nach wenigstens einem der vorangehenden Ansprüche, wobei das Injektormodell wenigstens beinhaltet:

- die Druckverläufe ($p_{IA}$, $p_{CC}$, $p_{JC}$, $p_{AC}$, $p_{SA}$) in mit dem flüssigen Kraftstoff gefüllten Volumina des Injektors
- Massenflussraten (m) zwischen den mit dem flüssigen Kraftstoff gefüllten Volumina des Injektors
- eine Position (z) der Nadel (6), vorzugsweise relativ zum Nadelsitz
- Dynamik des Aktuators der Nadel (6), vorzugsweise Dynamik eines Solenoidventils

7. Brennkraftmaschine nach wenigstens einem der vorangehenden Ansprüche, wobei der Injektor wenigstens aufweist:

- eine mit einer Common-Rail der Brennkraftmaschine verbundene Eingangsspeicherkammer (1)
- eine mit der Eingangsspeicherkammer (1) verbundene Speicherkammer (3) für flüssigen Kraftstoff
- einem mit der Speicherkammer (3) verbundenen Volumen über Nadelsitz
- einem einerseits mit der Speicherkammer (3) und andererseits mit einer Ablaufleitung verbundenen Verbindungsvolumen (5)
- eine durch eine Nadel (6) verschließbare und mit dem Volumen über Nadelsitz verbundene Ausbringöffnung für flüssigen Kraftstoff
- einen mittels des Aktuatoransteuersignals ansteuerbaren Aktuator, vorzugsweise Solenoidventil, zum Öffnen der Nadel (6)
- vorzugsweise einer einerseits mit der Speicherkammer (3) und andererseits mit dem Verbindungsvolumen (5) verbundenen Steuerkammer (2)

8. Brennkraftmaschine nach wenigstens einem der vorangehenden Ansprüche, wobei die wenigstens eine Messgröße ausgewählt ist aus den folgenden Größen oder einer Kombination daraus:

- Druck ($p_{CR}$) in einer Common-Rail der Brennkraftmaschine

- Druck ($p_{IA}$) in einer Eingangsspeicherkammer (1) des Injektors
- Druck ($p_{CC}$) in einer Steuerkammer (2) des Injektors
- Beginn des Abhebens der Nadel (6) vom Nadelsitz

9. Brennkraftmaschine nach wenigstens einem der vorangehenden Ansprüche, wobei die Regeleinrichtung dazu ausgebildet ist, den Algorithmus während jedes Verbrennungszyklus oder ausgewählter Verbrennungszyklen der Brennkraftmaschine auszuführen und bei Abweichungen das Aktuatoransteuersignal ($\Delta t$) während dieses Verbrennungszyklus zu korrigieren.

10. Brennkraftmaschine nach wenigstens einem der Ansprüche 1 bis 7, wobei die Regeleinrichtung dazu ausgebildet ist, den Algorithmus während jedes Verbrennungszyklus oder ausgewählter Verbrennungszyklen der Brennkraftmaschine auszuführen und bei Abweichungen das Aktuatoransteuersignal ($\Delta t$) in einem der nachfolgenden Verbrennungszyklen, bevorzugt im unmittelbar nachfolgenden Verbrennungszyklus, zu korrigieren.

11. Brennkraftmaschine nach wenigstens einem der vorangehenden Ansprüche, wobei die Regeleinrichtung dazu ausgebildet ist, den Algorithmus während jedes Verbrennungszyklus oder ausgewählter Verbrennungszyklen der Brennkraftmaschine auszuführen und die aufgetretenen Abweichungen statisch auszuwerten und eine Korrektur des Aktuatoransteuersignals ($\Delta t$) für diesen oder einen der nachfolgenden Verbrennungszyklen in Abhängigkeit der statischen Auswertung vorzunehmen.

12. Verfahren zum Betreiben einer Brennkraftmaschine, insbesondere einer Brennkraftmaschine nach wenigstens einem der vorangehenden Ansprüche, wobei einem Brennraum der Brennkraftmaschine flüssiger Kraftstoff zugeführt wird, **dadurch gekennzeichnet, dass** die dem Brennraum zugeführte Masse an flüssigem Kraftstoff in Abhängigkeit von einem Aktuatoransteuersignal ($\Delta t$) eines Aktuators eines Injektors für den flüssigen Kraftstoff unter Verwendung eines Injektormodells berechnet wird und das Aktuatoransteuersignal ($\Delta t$) bei Abweichungen zwischen einem Sollwert $\left(m_d^{ref}\right)$ für die Masse an flüssigem Kraftstoff und der berechneten Masse korrigiert wird.

13. Verfahren zum Betreiben eines Injektors, mit welchem Injektor flüssiger Kraftstoff in einen Brennraum einer Brennkraftmaschine eingespritzt werden kann, **dadurch gekennzeichnet, dass** die durch den Injektor einem Brennraum zugeführte Masse an flüssigem Kraftstoff in Abhängigkeit von einem Aktuatoransteuersignals ($\Delta t$) eines Aktuators eines Injektors für den flüssigen Kraftstoff unter Verwendung eines Injektormodells berechnet wird und das Aktuatoransteuersignals ($\Delta t$) bei Abweichungen zwischen einem Sollwert $\left(m_d^{ref}\right)$ für die Masse an flüssigem Kraftstoff und der berechneten Masse korrigiert wird.

Fig. 1

Fig. 2

Fig. 3

Fig. 4

Europäisches
Patentamt

European
Patent Office

Office européen
des brevets

**EUROPÄISCHER RECHERCHENBERICHT**

Nummer der Anmeldung

EP 15 19 2918

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 01/83969 A2 (CUMMINS INC [US]) 8. November 2001 (2001-11-08) * Seite 15, Zeile 29 - Seite 19, Zeile 9; Abbildungen 1-5 * ----- | 1-13 | INV. F02D41/14 F02D41/20 F02D41/40 |
| A | DE 10 2012 109655 A1 (DENSO CORP [JP]) 10. April 2014 (2014-04-10) * Ansprüche; Abbildungen * ----- | 6,7 | ADD. F02D41/28 |

**RECHERCHIERTE SACHGEBIETE (IPC)**

F02D
F02M

Der vorliegende Recherchenbericht wurde für alle Patentansprüche erstellt

| Recherchenort | Abschlußdatum der Recherche | Prüfer |
|---|---|---|
| München | 10. Juni 2016 | Aign, Torsten |

EPO FORM 1503 03.82 (P04C03)

**EP 3 165 747 A1**

## ANHANG ZUM EUROPÄISCHEN RECHERCHENBERICHT
## ÜBER DIE EUROPÄISCHE PATENTANMELDUNG NR.

EP 15 19 2918

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-06-2016

| Im Recherchenbericht angeführtes Patentdokument | Datum der Veröffentlichung | Mitglied(er) der Patentfamilie | Datum der Veröffentlichung |
|---|---|---|---|
| WO 0183969 A2 | 08-11-2001 | US 6557530 B1<br>US 2004011325 A1<br>WO 0183969 A2 | 06-05-2003<br>22-01-2004<br>08-11-2001 |
| DE 102012109655 A1 | 10-04-2014 | KEINE | |

Für nähere Einzelheiten zu diesem Anhang : siehe Amtsblatt des Europäischen Patentamts, Nr.12/82

EPO FORM P0461

13

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10055192 A1

- FR 2013